# EUROPEAN PATENT SPECIFICATION

(11) **EP 1 640 390 B1**
(45) Date of publication and mention of the grant of the patent: **09.11.2011**
(21) Application number: 04746857.4
(22) Date of filing: 25.06.2004
(51) Int. Cl.: C08F 255/00, C09D 151/06, C09J 151/06

(54) **MODIFIED POLYOLEFIN RESIN AND COMPOSITION**
MODIFIZIERTES POLYESTERHARZ UND ZUSAMMENSETZUNG
RESINE POLYOLEFINIQUE MODIFIEE ET COMPOSITION ASSOCIEE

(30) Priority: 26.06.2003 JP 2003183050
(43) Date of publication of application: 29.03.2006
(73) Proprietor: MITSUBISHI RAYON CO., LTD., Tokyo 108-8506 (JP)
(72) Inventor: NAKAMURA, Hiroki c/o Mitsubishi Rayon Co., Ltd., Otake-shi, Hiroshima 739-0693 (JP); TOKIMITSU, Toru c/o Mitsubishi Rayon Co., Ltd., Tokyo 108-8506 (JP); KOSHIRAI, Atsunori c/o Mitsubishi Rayon Co., Ltd., Toyama-shi, Toyama 931-8601 (JP)
(74) Representative: Jones, Helen M.M.
(86) International application number: PCT/JP2004/009388
(87) International publication number: WO 2005/000925

(56) References cited:
- EP-A- 1 036 817
- EP-A- 1 188 777
- JP-A- 6 256 430
- JP-A- 2002 167 412
- JP-A- 2002 201 236
- JP-A- 2002 309 161
- JP-A- 2004 051 808
- DATABASE WPI Week 200443 Thomson Scientific, London, GB; AN 2004-453247 XP002557604 & JP 2004 051808 A (KANSAI PAINT CO LTD) 19 February 2004 (2004-02-19)

## Description

### TECHNICAL FIELD

The present invention relates to a modified polyolefin resin composition which is improved in adhesion properties to the surface of a substrate (or base material) comprising a thermoplastic resin having a low- or non-polarity and exhibiting a hardly adherable properties, and improved in solubility in a solvent. Further, the present invention relates to the uses of the modified polyolefin resin composition.

The present application is an application filed claiming the priority based on Japanese patent application No. 2003-183050 filed on June 26, 2003 and the all teachings of the Japanese patent application are incorporated herein by this specific reference thereto.

### BACKGROUND ART

A polyolefin type resin is widely employed for various uses since the resin is excellent in mechanical properties and chemical resistance, and besides the resin can be processed easily and at a low cost. Moreover, the uses of a polyolefin type resin are further being expanded against a background of global environmental problems in recent years since the resin is excellent in recycling property.

However, since a polyolefin type resin is non-polar, it is difficult to make a paint, adhesive, or printing ink adhere fast to the surface of a substrate comprising the resin.

Accordingly, when painting or adhesion is performed on the surface of a molded product comprising a polyolefin type resin, a method is generally adopted in which the surface of the molded product is subjected to a plasma treatment, flame treatment, treatment for irradiating ultraviolet rays, or treatment by chromic acid to activate the surface of the molded product thereby improving adhesion properties of a paint or adhesive to a polyolefin type resin.

However, when such surface treatment is performed, painting process becomes complex, requires a much expense for the equipments, and brings a loss of time due to the additional treatment. Also, the surface treatment has such defects that variations in the effects of the surface treatment are apt to be caused by the differences in the shape or size of the molded product, or in the influences of a pigment or additive contained in the resin.

In this connection, a chlorinated polyolefin is known as a resin having good adhesion properties to an untreated polyolefin type resin. However, there is a tendency that the use of chlorine- containing compounds is avoided from an upsurge of interest in environmental problems in recent years. Besides, a chlorinated polyolefin is hardly dissolved in a solvent other than toluene, xylene, and benzene, and difficult to dissolve in an nonaromatic solvent while maintaining a good adhesion property.

As unchlorinated resin having a good adhesion properties to a polyolefin type resin, various acid-modified polyolefin resins including a polyolefin resin modified by an unsaturated carboxylic acid are proposed. For instance, a modified copolymer prepared by graft copolymerizing an unsaturated carboxylic acid, such as acrylic acid and maleic anhydride, to a polyolefin resin and then reacting the grafted polyolefin, for example, with a polyester or alcohol is disclosed (for example, Laid-open Japanese Patent Publication No. Hei 11-217537). Also, a modified polyolefin resin prepared by subjecting a polyolefin resin to a graft modification by an unsaturated carboxylic acid or a specific (meth)acrylate is disclosed (for example, Laid-open Japanese Patent Publication No. 2002-173514).

Although a composition comprising one of these acid-modified resins has a good adhesion properties to a resin having a low- or non-polarity and exhibiting a hardly adherable properties, such as a polyolefin type resin, there is a problem that the solubility of the resin composition in a solvent other than toluene, xylene, and benzene is still insufficient.

Further, there is a problem that the resin composition absorbs water component according to an environment where the resin composition is used, and thus, the adhesion properties of the resin composition to a resin having a low- or non-polarity and exhibiting a hardly adherable properties, such as polyolefin type resin, is reduced.

### DISCLOSURE OF THE INVENTION

Accordingly, an object of the present invention is to provide an unchlorinated type modified polyolefin resin which has excellent adhesion properties to a substrate comprising a resin having a low- or non-polarity and exhibiting hardly adherable properties, such as a polyolefin type resin, has an excellent solubility in a solvent, and has an excellent water resistance; a resin composition comprising the modified polyolefin resin; and the uses thereof.

That is, the modified polyolefin resin of the present invention is one produced by subjecting a polyolefin resin (A) to a graft modification by vinyl monomer(s) (B) comprising at least 4-t-butylcyclohexyl (meth)acrylate (b).

The modified polyolefin resin composition of the present invention is **characterized in that** the composition comprises the modified polyolefin resin described above.

The vinyl monomer(s) (B) preferably comprise no an unsaturated carboxylic acid or its anhydride.

The vinyl monomer(s) (B) preferably further comprises a monomer having a hydroxyl group in the molecule.

The modified polyolefin resin composition of the present invention described above is suitable in the use of a primer for painting.

The modified polyolefin resin composition of the present invention is suitable in the use of an adhesive.

Further, the modified polyolefin resin composition of the present invention is suitable in the use of a printing ink.

### BRIEF DESCRIPTION OF THE DRAWINGS

Fig. 1 is a perspective view showing a test piece (1) used for adhesion peel test.
Fig. 2 is a perspective view showing a test piece (2) used for adhesion peel test.
Fig. 3 is a perspective view explaining the state of the adhesion peel test.

### BEST MODE FOR CARRYING OUT THE INVENTION

Preferable embodiments of the present invention are described below with reference to the drawings. However, it should be understood that the scope of the present invention is by no means restricted by such specific embodiments described below.

Now, the present invention will be described in detail.

### <Polyolefin resin (A)>

The polyolefin resin (A) used in the present invention is an olefin homopolymer or olefin type copolymer obtained, for example, by a radical polymerization or ion polymerization of an olefin monomer; a copolymer of a major amount of olefin monomer and a minor amount of a vinyl monomer; a copolymer of an olefin monomer with a diene monomer; or a resin comprising, as a main component, such polymer or copolymer.

As specific examples of the polyolefin resin (A), a low-density polyethylene, ultra-low-density polyethylene, super ultra-low-density polyethylene, linear low-density polyethylene, high-density polyethylene, ultra-high-molecular-weight polyethylene, polypropylene, ethylene-propylene copolymer, polymethyl pentene, propylene-1-butene random copolymer, propylene-ethylene-1-butene random copolymer, copolymer prepared from propylene and an α-olefin having 5 to 12 carbon atoms, ethylene-nonconjugated diene copolymer, propylene-nonconjugated diene copolymer, ethylene-propylene-nonconjugated diene copolymer, polybutene, ethylenevinyl acetate copolymer, ethylene-vinyltrimethoxysilane copolymer, ethylene-methyl acrylate copolymer, ethylene-ethyl acrylate copolymer, ethylene-methyl methacrylate copolymer, and styrene-butadiene block copolymer and its hydrogenated copolymer can be mentioned. These polymers or copolymers may be used alone or in combination of two or more.

Among those, a low crystalline or noncrystalline polyolefin is preferably used as the polyolefin resin (A) when the solubility in a solvent is considered. As specific examples of the low crystalline or noncrystalline polyolefin, ethylene-propylene copolymer, propylene-1-butene random copolymer, propylene-ethylene-1-butene random copolymer, and styrene-butadiene block copolymer and its hydrogenated copolymer can be mentioned.

Further, when the influence to the environment is considered, it is preferable that the polyolefin resin (A) does not comprise a chlorine-containing polyolefin resin, that is, a chlorinated polyolefin resin.

### <Vinyl monomer(s) (B)>

The vinyl monomer(s) (B) used in the present invention is characterized by that the vinyl monomer(s) comprise at least 4-t-butylcyclohexyl (meth)acrylate

The vinyl monomer(s) (B) used in the present invention may comprise another monomer in addition to 4-t-butylcyclohexyl (meth)acrylate.

Type of another monomer is not limited especially so far as the monomer can be copolymerized by a radical polymerization with 4-t-butylcyclohexyl (meth)acrylate.

As specific examples of the another monomer, (meth) acrylates such as methyl (meth)acrylate, ethyl (meth)acrylate, n-propyl (meth)acrylate, n-butyl (meth)acrylate, isobutyl (meth)acrylate, isoamyl (meth)acrylate, lauryl (meth)acrylate, dodecyl (meth)acrylate, stearyl (meth)acrylate, phenyl (meth)acrylate, benzyl (meth)acrylate, glycidyl (meth)acrylate, 2-ethylhexyl (meth)acrylate, methoxyethyl (meth)acrylate, ethoxyethyl (meth)acrylate, normal-butoxyethyl (meth)acrylate, isobutoxyethyl (meth)acrylate, t-butoxyethyl (meth)acrylate, phenoxyethyl (meth)acrylate, nonylphenoxyethyl (meth)acrylate, 3-methoxybutyl (meth)acrylate, [Blenmer-PME-100 or 200, or AME-100 or 200] (trade name of a (meth)acrylate produced by NOF Corp.), [Blenmer-50POEP-800B or 50AOEP-800B] (trade name of a (meth)acrylate produced by NOF Corp.), and [Blenmer-20ANEP-600] (trade name of a (meth)acrylate produced by NOF Corp.); α, β- unsaturated carboxylic acids such as acrylic acid, methacrylic acid, fumaric acid, maleic anhydride, itaconic acid, itaconic anhydride, anhydride of bicyclo[2.2.1]-5-heptene-2,3- dicarboxylic acid; maleimides such as N-phenylmaleimde, N-cyclohexylmaleimde, and N-t-butylmaleimide; vinyl esters such as vinyl caprate, vinyl laurate, vinyl stearate, and vinyl trifluoroacetate; dienes such as butadiene, isoprene, 4-methyl-1,3-pentadiene, and 1,3-pentadiene; aromatic vinyl compounds such as styrene and mono- or polyalkylstyrenes, for example, o-methylstyrene, m-methylstyrene, p-methylstyrene, and o, p- dimethylstyrene; polymerizable amides such as methacrylamide, N-methylolmethacrylamide, butoxymethacrylamide, acrylamide, N-methylolacrylamide, and butoxyacrylamide; dialkylaminoethyl (meth)acrylates such as dimethylaminoethyl (meth)acrylate and diethylaminoethyl (meth)acrylate; and unsaturated organic silane compounds such as 3-methacryloxypropyltrimethoxysilane, 3-methacryloxypropyltriethoxysilane, and vinyltrimethoxysilane can be mentioned.

Among them, (meth)acrylates and α, β-unsaturated carboxylic acids are preferable from the aspects of the availability and adhesion properties. Besides, among these esters or acids, methyl mehacrylate, n-butyl methacrylate, lauryl methacrylate, dodecyl methacrylate, stearyl methacrylate, glicidyl methacrylate, methacrylic acid, methyl acrylate, n-butyl acrylate, and acrylic acid are more desirable. The another monomers may be used alone or in combination of 2 or more.

In the production of the modified polyolefin resin of the present invention, when the reduction of adhesion properties to a low- or non-polar resin exhibiting a hardly adherable properties, such as a polyolefin type resin, due to absorption of water component is taken into consideration, it is preferable that an unsaturated carboxylic acid or its anhydride is not contained in the vinyl monomer(s) (B).

The words "an unsaturated carboxylic acid or its anhydride is not contained" used herein means that the unsaturated carboxylic acid or its anhydride is not substantially contained. Accordingly, in the present invention, it presents no problem that the unsaturated carboxylic acid or its anhydride is contained in the vinyl monomer (s) (B) in an amount at which the intended effects by the present invention are not defeated, specifically in an amount of 0.1 % by mass or less.

In the modified polyolefin resin of the present invention, when the adhesion properties of a resin to a paint and the dispersibility of a pigment in the resin are taken into consideration, it is preferable that the vinyl monomer(s) (B) comprises a monomer having a hydroxyl group in the molecule. As specific examples of such monomer, various type of (meth)acrylates having a hydroxyl group, such as 2-hydroxyethyl (meth)acrylate, 2-hydroxypropyl (meth)acrylate, 2-hydroxybutyl (meth)acrylate, 3-hydroxybutyl (meth)acrylate, 4-hydroxybutyl (meth)acrylate, polyethylene glycol (meth)acrylate, polypropylene glycol (meth)acrylate, [PLACCEL FM or FA] (trade name of a caprolactone addition monomer produced by Daicel Chemical Industries, Ltd.), [FM-1 or FM-2] (trade name of an addition product of 2-hydroxyethyl methacrylate with 1 or 2 molecules of ε-caprolactone produced by Daicel Chemical Industries, Ltd.), and [CHDMMA] (trade name of 1,4-cyclohexanedimethanol acrylate produced by Nippon Kasei Chemical Co., Ltd.) can be mentioned.

Among them, 2-hydroxyethyl (meth)acrylate, 2-hydroxypropyl (meth)acrylate, 3-hydroxypropyl (meth)acrylate, 4-hydroxybutyl (meth)acrylate, [FM-1 or FM-2], and [CHDMMA] are preferable from the aspect of the availability and adhesion properties. These another monomers may be used alone or in combination of 2 or more.

In the production of the modified polyolefin resin of the present invention, when the influences to environment are considered, it is preferable that the vinyl monomer(s) (B) contain no chlorine atom in the molecule(s).

While the contents of the 4-t-butylcyclohexyl (meth)acrylate (b) in the vinyl monomer(s) (B) is not restricted especially, when the adhesion properties to a polyolefin substrate, solubility in a solvent, adhesion properties to a polar resin are considered, it is preferable that the amount of the 4-t-butylcyclohexyl (meth)acrylate (b) is 5 to 99.5% by mass in 100% by mass of the vinyl monomer(s) (B). the amount of the 4-t-butylcyclohexyl (meth)acrylate (b) is more desirably 10 to 95% by mass.

### <Modified polyolefin resin>

The modified polyolefin resin of the present invention is produced by subjecting a polyolefin resin (A) to a graft modification by the vinyl monomer(s) (B).

the term "graft modification" used herein means to form a graft copolymer by a radical polymerization of a vinyl monomer(s) (B) in the presence of a resin to be modified (polyolefin resin (A) used in the present invention). In the modified polyolefin resin obtained by subjecting a polyolefin resin (A) to a graft modification by vinyl monomer(s) (B), an unmodified polyolefin resin (A), and homopolymer(s) or copolymer(s) of the vinyl monomer(s), together with graft copolymer(s) are generally included. And thus, in the present invention, the resin obtained by the graft modification is called as "modified polyolefin resin" including all of those copolymer and polymers so far as the objects of the present invention are not defeated.

In order that a resin composition comprising a modified polyolefin resin of the present invention may exhibit excellent adhesion properties to a polyolefin substrate and a polar resin, and may have an excellent solubility in a solvent, it is necessary that the modified polyolefin resin is one produced by subjecting a polyolefin resin (A) to a graft modification by vinyl monomer(s) comprising at least 4-t-butylcyclohexyl (meth)acrylate (b).

Weight average molecular weight of the modified polyolefin resin is preferably 10, 000 to 300, 000 and more desirably 20, 000 to 200, 000 from the view point of strength and shape maintenance of the modified resin. The "weight average molecular weight" is determined by employing a gel permeation chromatography (GPC150-C produced by Waters Inc., polymethyl methacrylate conversion) using chloroform as solvent under a condition of 35°C.

### <Production of modified polyolefin resin>

The modified polyolefin resin of the present invention can be produced by one of known methods, for example, a solution method in which a polyolefin resin (A) is dissolved in a solvent of an aromatic hydrocarbon, such as xylene, at a high temperature, vinyl monomer(s) (B) are added thereto, and then they are subjected to a graft polymerization; a kneading method in which a polyolefin resin (A) and vinyl monomer(s) are melted and kneaded by using a Banbury mixer, kneader, or extruder in the presence of a peroxide; a radiation method in which radiation is irradiated to a mixture of a polyolefin resin (A) with vinyl monomer (s) (B), or impregnation-polymerization method in which a polyolefin resin (A) is impregnated with vinyl monomer(s) (B) and then the vinyl monomer(s) (B) are polymerized by radical polymerization using an organic peroxide.

The graft modification is preferably conducted at a mass ratio of a polyolefin resin (A) to vinyl monomer (s) (A/B) in the range of 1/95 to 99/5. When the amount of a polyolefin resin is too small, the adhesion properties to a substrate comprising a low- or non-polarity resin and exhibiting a hardly adherable properties, such as a polypropylene, are sometimes reduced. Conversely, when the amount of vinyl monomer(s) is too small, solubility in a solvent and adhesion properties to a polar resin are sometimes reduced. Thus, the mass ratio (A/B) is preferably in the range of 5/95 to 90/10.

When the vinyl monomer(s) (B) are subjected to a radical polymerization in the presence of a polyolefin resin (A), it is preferable to use a radical polymerization initiator. As the radical polymerization initiator, an organic peroxide or azo compound is normally used. As specific examples of the organic peroxide, 2,4-dichlorobenzoil peroxide, t-butyl peroxypivalate, o-methylbenzoyl peroxide, bis-3,5,5,-trimethylhexanoyl peroxide, octanoyl peroxide, t-butyl peroxy-2-ethyl hexanoate, cyclohexanone peroxide, benzoyl peroxide, methyl ethyl ketone peroxide, dicumyl peroxide, lauroyl peroxide, diisopropylbenzene hydroperoxide, t-butyl hydroperoxide, and t-butyl peroxide can be mentioned. On the other hand, as specific examples of the azo compound, 2,2'-azobisisobutylonitrile, 2,2'-azobis(2,4-dimethylvaleronitrile), and 2,2'-azobis(2,4-dimethyl-4-methoxyvaleronitrile) can be mentioned. Among these, an organic peroxide is preferably used to generate grafting points in a polyolefin resin (A). These radical polymerization initiators may be used alone or in combination of 2 or more.

Radical polymerization initiator is normally used in an amount in the range of 0.001 to 20 parts by mass per 100 parts by mass of the vinyl monomer(s) (B). When the amount of the radical polymerization initiator is too small, polymerization reaction sometimes does not smoothly proceed, and conversely, when the amount is too large, molecular cleavage of a polyolefin resin (A) is sometimes apt to occur. The amount of the radical polymerization initiators to be used is more preferably 0.01 to 10 parts by mass and most desirably 0.1 to 5 parts by mass per 100 parts by mass of the vinyl monomer(s) (B).

The temperature at which the vinyl monomer(s) (B) are polymerized is not restricted especially so far as it is in the range in which a radical polymerization initiator used is decomposed, and it is usually in the range of 50 to 150°C.

In the present invention, a chain transfer agent may be added when necessary, at the time of graft modification. The chain transfer agent can satisfactorily be selected from those which are normally used for a radical polymerization, and a mercaptan type chain transfer agent such as an alkyl mercaptan having 2 to 20 carbon atoms, mercapto acids, thiophenol, or their mixture is preferably used.

### <Modified polyolefin resin composition>

A modified polyolefin resin composition can be produced by adding a solvent or the like to the modified polyolefin resin of the present invention.

The modified polyolefin resin composition of the present invention comprises the modified polyolefin resin described above and can be employed in various uses such as a primer for painting, adhesive, and printing ink. The modified polyolefin resin composition of the present invention can be used as a primer for painting, adhesive, printing ink, and others by itself. Also, the modified polyolefin resin composition of the present invention can be used as a component for imparting adhesion properties to a primer composition for painting, resin composition for adhesive, or a resin composition for printing ink.

The modified polyolefin resin composition of the present invention can be made into a form of a solution, powder, paste, sheet, or the like according to its use. Besides, at that time, various type of stabilizers such as an antioxidant, UV absorber, and thermal stabilizer; a coloring agent, for example, an inorganic pigment such as titanium oxide, and organic pigment; and an agent for imparting electrical conductivity, such as a carbon black and ferrite may further be contained in the resin composition.

When the resin composition is used as a solution, as the solvent, aromatic hydrocarbons such as toluene, xylene, [Swasol #100] (trade name of a solvent produced by MARUZEN PETROCHEMICAL CO., LTD.), and [Solvesso #150] (trade name of a solvent produced by EXXONMobile Co.,LTD.), alicyclic hydrocarbons such as cyclohexane, methylcyclohexane, and ethylcyclohexane, ketones such as methyl ethyl ketone, methyl isobutyl ketone, and cyclohexanone; esters such as ethyl acetate, n-butyl acetate, propylene glycol monomethyl ether acetate, and ┌DBE┘ (trade name of a solvent produced by Du Pont KABUSHIKI KAISHA); alcohols such as n-butanol, isopropyl alcohol, and cyclohexanol; glycol type solvents such as ethylene glycol monobutyl ether, and propylene glycol monomethyl ether; and aliphatic hydrocarbons such as heptane, hexane, octane, mineral turpentine, [ISOPAR E] (trade name of a solvent produced by EXXONMobile Co.,LTD.) can be mentioned. Among them, aromatic hydrocarbons, alicylic hydrocarbons, and aliphatic hydrocarbons are particularly preferable from the viewpoint of workability.

Further, it is preferable that the modified polyolefin resin is normally dissolved in an organic solvent so that the concentration of the resin becomes lower than 60 % by mass in the solvent from the aspect of handling characteristics.

When the modified polyolefin resin comprises a component having a hydroxyl group, it is possible to achieve the improvements of the film performances such as solvent resistance, water resistance, and weathering resistance by mixing a melamine resin or an isocyanate compound therewith as a component of a crosslinking agent.

As specific examples of the melamine resin, a n-butylated melamine resin and methylated melamine resin can be mentioned.

Also, as the isocyanate compound, a polyisocyanate compound having a free isocyanate group or blocked isocyanate compound can be mentioned. As specific examples, aliphatic isocyanates such as hexamethylene diisocyanate and trimethyl hexamethylene diisocyanate; cyclic aliphatic diisocyanates such as isophoronediisocyanate, methylcyclohexane-2,4- (or 2,6-)diisocyanate, 4,4'-methylene-bis(cyclohexyl isocyanate), and 1,3-di(isocyanatemethyl)-cyclohexane; aromatic diisocyanates such as tolylene diisocyanate and xylene diisocyanate; adducts of one of these organic diisocyanates with a polyhydric alcohol or water, adducts of an excess amount of one of these organic diisocyanates with a polyhydric alcohol or water, polymers of one of the organic diisocyanates mentioned above, and further isocyanate biuret form can be mentioned.

The isocyanate compound is preferably contained in a resin composition for printing ink at an equivalent ratio of the compound to a hydroxyl group-containing component in the resin composition of 0.1/1 to 3/1 (NCO/OH).

The modified polyolefin resin composition described above has excellent adhesion properties to a substrate comprising a low polar resin and exhibiting a hardly adherable properties, such as a polyolefin type resin, and is excellent in solubility in a solvent even when a chlorine-containing compound is not included, because the resin composition comprises a modified polyolefin resin produced through a graft modification by vinyl monomer(s) (B) comprising at least 4-t-butylcyclohexyl (meth)acrylate.

Further, the modified resin composition of the present invention is suitable for the use of a primer for painting, since the modified polyolefin resin of the present invention is excellent in adhesion properties not only to a non-polar substrate comprising a polyolefin resin but also to a top coat or clear coating. When the rein composition is used as primer, its thickness is preferably in the range of 1 to 80 µm.

When an adhesive or printing ink is applied to a molded product, many times not only a non-polar substrate comprising a polyolefin resin but also a polar resin such as a polyester, polyurethane, and polyamide is used together in the molded product. Since the modified polyolefin resin of the present invention has excellent adhesion properties to such polar resin, the modified polyolefin resin composition of the present invention is suitable for the use of an adhesive or printing ink. When the resin composition is used as printing ink, its thickness is preferably in the range of 0.1 to 1,000 µm.

### EXAMPLES

The present invention will be described below in more detail with reference to Examples and Comparative Examples. However, it should be understood that the scope of the present invention is by no means restrictive by such specific examples. In the examples, all "part(s)" and "%" means "part(s) by mass" and "% by mass", respectively. Examples 6 to 9, 12, 13, 18 and 19 do nor form part of the invention and are included as reference Examples only.

### EXAMPLE 1

In a flask equipped with a cooling tube, thermometer, dropping funnel, and stirrer, 1400 parts of toluene and 70 parts of a propylene-ethylene-1-butene random copolymer (VESTOPLAST 792 produced by Degussa Japan Co., LTD) were placed, and the propylene-ethylene-1-butene random copolymer was dissolved at an inner temperature of 85°C. Next, a mixture of 21 parts of methyl methacrylate, 9 parts of 4-t-butylcyclohexyl acrylate, and 0.3 parts of t-butyl peroxy-2-ethyl hexanoate was dropped over 20 min and then subjected to a polymerization reaction by holding them for 7 hours at an inner temperature of 85°C. After the reaction product was cooled down to room temperature, it was put in a large quantity of methanol to purify thereby obtain a modified propylene-ethylene-1-butene random copolymer having a weight average molecular weight of 109,000.

### Example 2

Example 1 was repeated with the exception that the mixture of 21 parts of methyl methacrylate, 9 parts of 4-t-butylcyclohexyl acrylate, and 0.3 parts of t-butyl peroxy-2-ethyl hexanoate used in Example 1 was changed to a mixture of 18 parts of methyl methacrylate, 9 parts of 4-t-butylcyclohexyl acrylate, 3 parts of 4-hydroxybutyl acrylate, and 0.3 parts of t-butyl peroxy-2-ethyl hexanoate to obtain a modified propylene-ethylene-1-butene random copolymer having a weight average molecular weight of 112,000.

### Example 3

Example 1 was repeated with the exception that the amount of the propylene-ethylene-1-butene random copolymer was changed from 70 parts to 20 parts, and the mixture of 21 parts of methyl methacrylate, 9 parts of 4-t-butylcyclohexyl acrylate, and 0.3 parts of t-butyl peroxy-2-ethyl hexanoate was changed to a mixture of 60 parts of 4-t-butylcyclohexyl acrylate, 19 parts of 4-hydroxybutyl acrylate, 1 part of methacrylic acid, and 0.8 parts of t-butyl peroxy-2-ethyl hexanoate to obtain a modified propylene-ethylene-1-butene random copolymer having a weight average molecular weight of 25,000.

### Example 4

Example 3 was repeated with the exception that the propylene-ethylene-1-butene random copolymer was changed to a styrene-ethylene-butylene-styrene copolymer (TUFTEC H1221 produced by Asahi Chemical Ind.) to obtain a modified styrene-ethylene-butylene-styrene copolymer having a weight average molecular weight of 117,000.

### Example 5

Example 2 was repeated with the exception that the 4-t-butylcyclohexyl acrylate was changed to 4-t-butylcyclohexyl methacrylate to obtain a modified propylene-ethylene-1-butene random copolymer having a weight average molecular weight of 17,000.

### Example 6 (Reference Example)

Example 2 was repeated with the exception that 4-t-butylcyclohexyl acrylate was change to cyclohexyl acrylate to obtain a modified propylene-ethylene-1-butene random copolymer having a weight average molecular weight of 124,000.

### Example 7 (Reference Example)

Example 2 was repeated with the exception that the 4-t-butylcycohexyl acrylate was change to cyclohexyl methacrylate to obtain a modified propylene-ethylene-1-butene random copolymer having a weight average molecular weight of 128,000.

### Example 8 (Reference Example)

Example 2 was repeated with the exception that the 4-t-butylcyclohexyl acrylate was changed to t-butyl methacrylate to obtain a modified propylene-ethylene-1-butene random copolymer having a weight average molecular weight of 134,000.

### Example 9 (Reference Example)

Example 2 was repeated with the exception that the 4-t-butylcyclohexyl acrylate was changed to isobornyl methacrylate to obtain a modified propylene-ethylene-1-butene random copolymer having a weight average molecular weight of 126,000.

### Example 10

In a flask equipped with a cooling tube, thermometer, dropping funnel, and stirrer, 980 parts of butyl acetate, 420 parts of cyclohexane, 45 parts of a propylene-ethylene-1-butene random copolymer (VESTOPLAST 792 produced by Degussa Japan Co.,LTD) and 15 parts of a styrene-ethylene-butylene-styrene copolymer (TUFTEC H1221 produced by Asahi Chemical Ind.) were placed, and respective copolymers were dissolved at an inner temperature of 85°C. Next, a mixture of 30 parts of 4-t-butylcyclohexyl acrylate, 10 parts of 4-hydroxybutyl acrylate, and 0.4 parts of t-butyl peroxy-2-ethyl hexanoate was dropped over 20 min and then subjected to a polymerization reaction by holding them for 5 hours at an inner temperature of 85°C. After the reaction product was cooled down to room temperature, it was put in a large quantity of methanol to purify thereby obtain a mixture of a modified propylene-ethylene-1-butene random copolymer and a modified styrene-ethylene- butylene-styrene copolymer. A weight average molecular weight was 140,000.

### Example 11

Example 10 was repeated with the exception that the 45 parts of propylene-ethylene-1-butene random copolymer (VESTOPLAST 792 produced by Degussa Japan Co., LTD) and 15 parts of the styrene-ethylene-butylene-styrene copolymer (TUFTEC H1221 produced by Asahi Chemical Ind.) were changed to 35 parts of a propylene- ethylene-1-butene random copolymer (VESTOPLAST 792 produced by Degussa Japan Co., LTD) and 35 parts of a styrene-ethylene- butylene-styrene copolymer (TUFTEC H1221 produced by Asahi Chemical Ind.), respectively, to obtain a mixture of a modified propylene-ethylene-1-butene random copolymer and a modified styrene-ethylene-butylene-styrene copolymer. A weight average molecular weight was 135,000.

### Example 12 (Reference Example)

Example 10 was repeated with the exception that the 30 parts of 4-t-butylcyclohexyl acrylate was changed to 30 parts of cyclohexyl acrylate to obtain a mixture of a modified propylene-ethylene-1-butene random copolymer and a modified styrene-ethylene butylene-styrene copolymer. A weight average molecular weight was 147,000.

### Example 13 (Reference Example)

Example 10 was repeated with the exception that the 30 parts of 4-t-butylcyclohexyl acrylate was changed to 30 parts of t-butyl methacrylate to obtain a mixture of a modified propylene-ethylene- 1-butene random copolymer and a modified styrene-ethylene- butylene-styrene copolymer. A weight average molecular weight was 146,000.

### Example 14

Example 10 was repeated with the exception that the styrene-ethylene-butylene-styrene copolymer was changed to a ethylene-propylene copolymer to obtain a mixture of a modified propylene-ethylene-1-butene random copolymer and a modified styrene-ethylene-butylene-styrene copolymer. A weight average molecular weight was 136,000.

### Example 15

Example 10 was repeated with the exception that the styrene-ethylene-butylene-styrene copolymer was changed to a propylene-1-buten random copolymer (UBETAC UT2780 produced by Ube Industries, LTD) to obtain a mixture of a modified propylene-ethylene-1-butene random copolymer and a modified propylene-1-butene random copolymer. A weight average molecular weight was 128,000.

### Example 16

Example 1 was repeated with the exception that the mixture of 21 parts of methyl methacrylate, 9 parts of 4-t-butylcyclohexyl acrylate, and 0.3 parts of t-butyl peroxy-2-ethyl hexanoate was changed to a mixture of 17 parts of methyl methacrylate, 9 parts of 4-t-butylcyclohexyl acrylate, 3 parts of 4-hydroxybutyl acrylate, 1 part of 1,3-butylene dimethacrylate, and 0.3 parts of t-butyl peroxy-2-ethyl hexanoate to obtain a modified propylene- ethylene-1-butene random copolymer having a weight average molecular weight of 144,000.

### Example 17

Example 10 was repeated with the exception that the mixture of 30 parts of 4-t-butylcyclohexyl acrylate, 10 parts of 4-hydroxybutyl acrylate, and 0.4 parts of t-butyl peroxy-2-ethyl hexanoate was changed to a mixture of 29 parts of 4-t-butylcyclohexyl acrylate, 10 parts of 4-hydroxybutyl acrylate, 1 part of 1,3-butylene dimethacrylate, and 0.4 parts of t-butyl peroxy-2-ethyl hexanoate to obtain a mixture of a modified propylene-ethylene-1-butene random copolymer and a modified styrene-ethylene-butylene-styrene copolymer. A weight average molecular weight was 150,000.

### Example 18 (Reference Example)

Example 16 was repeated with the exception that the 9 parts of 4-t-butylcyclohexyl acrylate was changed to t-butyl methacrylate to obtain a modified propylene-ethylene-1-butene random copolymer having a weight average molecvular weight of 147,000.

### Example 19 (Reference Example)

Example 17 was repeated with the exception that the 30 parts of 4-t-butylcyclohexyl acrylate was changed to t-butyl methacrylate to obtain a mixture of a modified propylene-ethylene-1-butene random copolymer and a modified styrene-ethylene-butylene-styrene copolymer. A weight average molecular weight was 151,000.

### Example 20

In a flask equipped with a cooling tube, thermometer, dropping funnel, and stirrer, 900 parts of deionized water, 6 parts of tricalcium phosphate, 0.09 parts of sodium dodecylsulfonate, 70 parts of a propylene-ethylene-1-butene random copolymer, 18 parts of methyl methacrylate, 9 parts of 4-t-butylcyclohexyl acrylate, 3 parts of 4-hydroxybutyl acrylate, and 0.3 parts of t-butyl peroxy-2-ethyl hexanoate were placeed. After the reactants were stirred at an inner temperature of 40°C for 1 hour, they were subjected to a polymerization reaction by raising the temperature and maintaining the flask at an inner temperature of 85°C for 5 hours. After the reaction product was cooled down to room temperature, it was recovered by filtration, and then washed with water and dried to obtain a modified propylene-ethylene-1-butene random copolymer having a weight average molecular weight of 125,000.

### Example 21

In a flask equipped with a cooling tube, thermometer, dropping funnel, and stirrer, 900 parts of deionized water, 6 parts of tricalcium phosphate, 0.09 parts of sodium dodecylsulfonate, 45 parts of a propylene-ethylene-1-butene random copolymer, 15 parts of a styrene-ethylene-butylene-styrene copolymer, 30 parts of 4-t-butylcyclohexyl acrylate, 10 parts of 4-hydroxybutyl acrylate, and 0.4 parts of t-butyl peroxy-2-ethyl hexanoate were placed. After the reactants were stirred at an inner temperature of 40°C for 1 hour, they were subjected to a polymerization reaction by raising the temperature and maintaining the flask at an inner temperature of 85°C for 5 hours. After the reaction product was cooled down to room temperature, it was recovered by filtration, and then washed with water and dried to obtain a mixture of a modified propylene-ethylene-1-butene random copolymer and a modified styrene-ethylene-butylene-styrene copolymer. A weight average molecular weight was 160,000.

### Example 22

In a flask equipped with a cooling tube, thermometer, dropping funnel, and stirrer, 600 parts of methyl methacrylate, 300 parts of 4-t-butylcyclohexyl acrylate, 100 parts of 4-hydroxybutyl acrylate, 10 parts of t-butyl peroxy-2-ethyl hexanoate, and 100 parts of a propylene-ethylene-1-butene random copolymer were placed, stirred at an inner temperature of 40°C for 1 hour, and then the propylene-ethylene-1-butene random copolymer was recovered by filtration. The recovered propylene-ethylene-1-butene random copolymer in an amount of 100 parts was impregnated with 52 parts of a mixture of methyl methacrylate, 4-t-butylcyclohexyl acrylate, 4-hydroxybutyl acrylate, and t-butyl peroxy-2-ethyl hexanoate.

The propylene-ethylene-1-butene random copolymer thus obtained was melted with a twin-screw extruder under a condition of 200°C and subjected to a deaeration in the barrel of the extruder to remove residual unreacted substances thereby obtain a modified propylene-ethylene-1-butene random copolymer having a weight average molecular weight of 120,000.

### Comparative Example 1

Example 1 was repeated with the exceptin that the mixture of 21 parts of methyl methacrylate, 9 parts of 4-t-butylcyclohexyl acrylate, and 0.3 parts of t-butyl peroxy-2-ethyl hexanoate was changed to a mixture of 30 parts of methyl methcrylate and 0.3 parts of t-butyl peroxy-2-ethyl hexanoate to obtain a modified propylene-ethylene-1-butene random copolymer having a weight average molecular weight of 120,000.

### Comparative Example 2

A mixture of 30 parts of a random copolymer of methyl methacrylate and 4-t-butylcyclohexyl acrylate (methyl methacrylate component 70 %, 4-t-butylcyclohexyl acrylate component 30 %, weight average molecular weight 50,000) and 70 parts of a propylene- ehylene-1-butene random copolymer was melted with a twin-screw extruder under a condition of 200°C to obtain a blended product.

### Test 1 (Solubility in a solvent)

Modified polyolefin resin compositions prepared in Examples 1 through 22 and Comparative Example 1, and the blended product prepared in Comparative Example 2 were added to toluene or butyl acetate/cyclohexane (30 %/70 %) mixed solvent so that the polymer concentration becomes 10 % in the solutions to be obtained, respectively, and then stirred at 50°C for 24 hours. Evaluation of the solubility was made by subjecting each of the solutions to a filtration with a nylon net of a 200 meshes (retaining particle size: 77 µm) and evaluating a resin composition or blended product from which no insoluble residues were recovered on the nylon net as grade "O" and evaluating a resin composition or blended product from which insoluble residues were recovered as grade "X", respectively. Test results are shown in Table 1.

### Test 2 (Adhesion properties to a PP substrate)

Each of the polymer solutions prepared in Test 1 was applied on the surface of a substrate, that is, a plate of 3 mm thickness obtained by injection molding a polypropylene (NOVATEC-pp TX-1810A produced by Japan Polychem Corporation), by a spray coating so that the dried film thickness becomes 10 µm. The plate was allowed to stand at room temperature for 15 min and then heated at 80°C for 30 min to dry the coated surface thereby obtain a painted plate. The coated film formed on the substrate was cut into squares (1 mm distance and 100 squares) and subjected to a peel test with a cellophane adhesive tape. The adhesion properties were evaluated based on the adhesion ratio (number of the squares remained on the substrate) (JIS K 5400). Test results are shown in Table 1.

### Test 3 (Adhesion properties as primer)

Modified polyolefin resin compositions prepared in Examples 1 through 22 and Comparative Example 1, and the blended product prepared in Comparative Example 2 were dissolved in butyl acetate/cyclohexane (30 %/70 %) mixed solvent so that the polymer concentration becomes 5 % in the solutions to be obtained to prepare primer solutions, respectively. Each of the primer solutions thus prepared was applied on the surface of a substrate, that is, a plate of 3 mm thickness obtained by injection molding a polypropylene (NOVATEC-pp TX-1810A produced by Japan Polychem Corporation), to form a primer layer of 10 µm thickness, and then an urethane type paint was applied by spray coating on the primer layer so that the dried film thickness becomes 30 µm. The plate was allowed to stand at room temperature for 15 min and then heated at 90 °C for 40 min to dry the coated surface thereby obtain a plate painted by an urethane paint.

The coated film on the substrate was cut into squares (1 mm distance and 100 squares) and subjected to a peel test with a cellophane adhesive tape. The adhesion properties were evaluated based on the adhesion ratio (number of the squares remained on the substrate) (JIS K 5400). Test results are shown in Table 1.

### Test 4 (Adhesion peel strength)

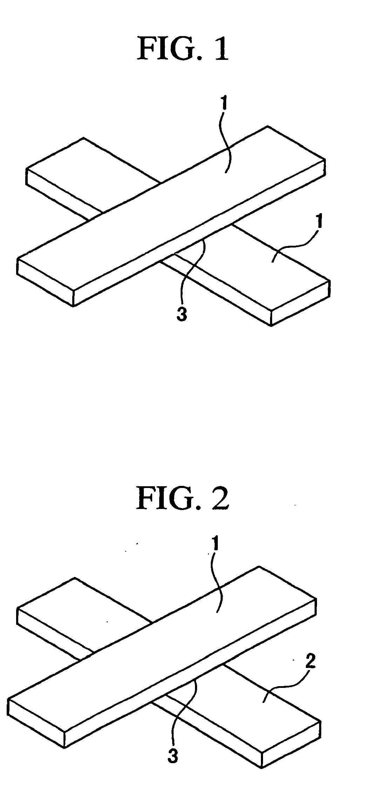

Modified polyolefin resin compositions prepared in Examples 1 through 22 and Comparative Example 1, and the blended product prepared in Comparative Example 2 were dissolved in toluene so that the polymer concentration becomes 20 % in the solutions to be obtained to prepare adhesive solutions, respectively. Each of the adhesive solutions in an amount of 20 µl was applied on the surfaces of the center portions of two substrates made of a polypropylene (NOVATEC-pp FA3DA, ISO square bar, 64 x 12.6 x 6 mm, produced by Japan Polychem Corporation). Next, the substrates were piled up as shown in Fig. 1 so that the substrates are disposed in crosswise relationship each other (size of adhered area 3: 1.26 cm x 1.26 cm). Subsequently, the substrates were allowed to stand under a load of 500 g at room temperature for 15 min, and then dried in a drier preset at 80°C for 30 min to form test piece (1) used for adhesion peel test of polypropylene substrates.

Also, in the same manner as described above, test piece (2) used for adhesion peel test of a polypropylene substrate 1 with a substrate 2 made of a methcrylic resin (Acrypet VH3 ("Acrypet" is a trade mark for a methacrylic resin produced by Mitsubishi Rayon Co., Ltd., ISO square bar, 64 x 12. 6 x 6 mm) was prepared.

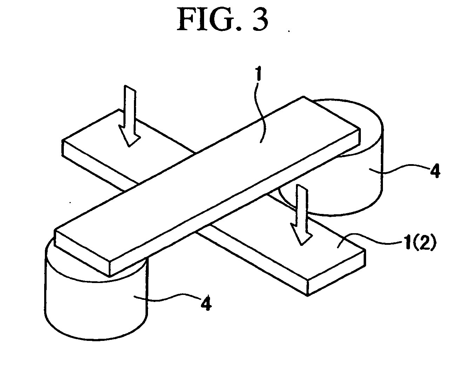

Determination of adhesion strength of the test pieces described above were carried out by using a Tensilon UTM-1-2500 (produced by Toyo Baldwin Co., Ltd.). Specifically, as shown in Fig. 3, both ends of the upper substrate of the test piece were placed on fixing jigs 4, 4, respectively. Then, a force was applied on the two portions of the lower substrate and the adhesion strength at that time was determined. Peel rate was preset at 2 mm/min. The test results are shown in Table 1.

### Test 5 (Adhesion properties as printing ink)

To each 1 part of the modified polyolefin resin compositions prepared in Examples 1 through 22 and Comparative Example 1, and the blended product prepared in Comparative Example 2, were added 9 parts of an urethane resin used for ink (SANPRENE IB-422 produced by Sanyo Chemical Industries, Ltd.), 40 parts of pigment (TiO₂ white pigment, TIPAQUE R-820, produced by Ishihara Sangyo Kaisha, Ltd.), and 50 parts of toluene, and then mixed and kneaded with a paint shaker to prepare an ink for white printing, respectively.

Each of the white printing inks thus obtained was applied on the surface of a substrate, that is, a plate of 3 mm thickness obtained by injection molding a polypropylene (NOVATEC-PP FA3DA, produced by Japan Polychem Corporation), with a #12 Mayer bar. The plate was allowed to stand at room temperature for 15 min and then dried in a drier preset at 80°C for 30 min to form a coated film having a thickness of 30 µm.

The coated film was cut into squares (1 mm distance and 100 squares) and subjected to a peel test with a cellophane adhesive tape. The adhesion properties were evaluated based on the adhesion ratio (number of the squares remained on the substrate) (JIS K 5400). Test results are shown in Table 1.

**Table 1 (to be continued)**

| | Chemical composition of polymer | | Test 1 | | | Test 2 |
|---|---|---|---|---|---|---|
| | | | Solubility in a solvent | | PP substrate adhesion properties | Paint adhesion properties |
| | | | Toluene | Butyl acetate/ cyclohexane | | |
| Ex. 1 | PEB/tBCHNMMA: 70:/9/21 | | ○ | ○ | 100 | 100 |
| 2 | PEB/tBCHA/MMA/4HBA: 70/9/18/3 | | ○ | ○ | 100 | 100 |
| 3 | PEB/tBCHN4HBA/MAA: 20/60/19/1 | | ○ | ○ | 100 | 100 |
| 4 | SEBS/tBCHA/4HBA/MAA: 20/60/19/1 | | ○ | ○ | 100 | 100 |
| 5 | PEB/tBCHMA/MMA/4HBA: 70/9/18/3 | | ○ | ○ | 100 | 100 |
| 6 | PEB/CHA/MMA/4HBA/: 70/9/18/3 | | ○ | ○ | 100 | 100 |
| 7 | PEB/CHMA/MMA/4HBA: 70/9/18/3 | | ○ | ○ | 100 | 100 |
| 8 | PEB/tBMA/MMA/4HBA: 70/9/18/3 | | ○ | ○ | 100 | 100 |
| 9 | PEB/IBXMA/MMA/4HBA: 70/9/18/3 | | ○ | ○ | 100 | 100 |
| 10 | PEB/SEBS/tBCHA/4HBA: 45/15/30/10 | | ○ | ○ | 100 | 100 |
| 11 | PEB/SEBS/tBCHA/4HBA: 35/35/30/10 | | ○ | ○ | 100 | 100 |
| 12 | PEB/SEBS/CHA/4HBA: 45/15/30/10 | | ○ | ○ | 100 | 100 |
| 13 | PEB/SEBS/tBMA/4HBA: 45/15/30/10 | | ○ | ○ | 100 | 100 |
| 14 | PEB/EPR/tBCHA/4HBA: 45/15/30/10 | | ○ | ○ | 100 | 100 |
| 15 | PEB/PB/tBCHA/4HBA: 45/15/30/10 | | ○ | ○ | 100 | 100 |
| 16 | PEB/tBCHA/MMA/4HBABDMA: 70/9/17/3/1 | | ○ | ○ | 100 | 100 |
| 17 | PEB/SEBS/tBCHA/4HBA/BDMA: 45/ 15/29//10/1 | | ○ | ○ | 100 | 100 |
| 18 | PEB/tBMA/MMA/4HBA/BDMA: 70/9/ 17/3/1 | | ○ | ○ | 100 | 100 |
| 19 | PEB/SEBS/tBMA/4HBA/BDMA: 45/ 15/29//10/1 | | ○ | ○ | 100 | 100 |
| 20 | PEB/tBCHA/MMA/4HBA: 70/9/18/3 | | ○ | ○ | 100 | 100 |
| 21 | PEB/SEBS/tBCHA/4HBA: 45/15/30/10 | | ○ | ○ | 100 | 100 |
| 22 | PEB/tBCHA/MMA/4HBA: 70/18/9/3 | | ○ | ○ | 100 | 100 |
| Compar. Ex. 1 | | PEB/MMA/: 70/30 | X | X | 0 | 0 |
| 2 | | PEB/P(tBCHA/MMA): 70/(9/21) | ○ | ○ | 0 | 0 |

**Table 1 (continued)**

| | Chemical composition of polymer | | Test 3 | | Test 4 |
|---|---|---|---|---|---|
| | | | Adhesion peel strength (MPa) | | Ink adhesion properties |
| | | | Test piece (1) | Test piece (2) | |
| Ex. 1 | PEB/tBCHA/MMA:70:/9/21 | | 1.48 | 0.52 | 100 |
| 2 | PEB/tBCHA/MMA/4HBA: 70/9/18/3 | | 1.43 | 0.87 | 100 |
| 3 | PEB/tBCHA/4HBA/MAA: 20/60/19/1 | | 0.54 | 0.78 | 100 |
| 4 | SEBS/tBCHA/4HBA/MAA: 20/60/19/1 | | 0.59 | 0.64 | 100 |
| 5 | PEB/tBCHMA/MMA/4HBA: 70/9/18/3 | | 1.38 | 0.67 | 100 |
| 6 | PEB/CHA/MMA/4HBA/: 70/9/18/3 | | 1.38 | 0.81 | 100 |
| 7 | PEB/CHMA/MMA/4HBA: 70/9/18/3 | | 1.33 | 0.66 | 100 |
| 8 | PEB/tBMA/MMA/4HBA: 70/9/18/3 | | 1.39 | 0.78 | 100 |
| 9 | PEB/IBXMA/MMA/4HBA: 70/9/18/3 | | 1.37 | 0.72 | 100 |
| 10 | PEB/SEBS/tBCHA/4HBA: 45/15/30/10 | | 1.39 | 0.86 | 100 |
| 11 | PEB/SEBS/tBCHA/4HBA: 35/35/30/10 | | 1.32 | 0.91 | 100 |
| 12 | PEB/SEBS/CHA/4HBA: 45/15/30/10 | | 1.09 | 0.81 | 100 |
| 13 | PEB/SEBS/tBMA/4HBA: 45/15/30/10 | | 1.10 | 0.82 | 100 |
| 14 | PEB/EPR/tBCHA/4HBA: 45/15/30/10 | | 0.65 | 0.83 | 100 |
| 15 | PEB/PB/tBCHA/4HBA: 45/15/30/10 | | 0.68 | 0.79 | 100 |
| 16 | PEB/tBCHA/MMA/4HBA/BDMA: 70/9/17/3/1 | | 1.43 | 0.78 | 100 |
| 17 | PEB/SEBS/tBCHA/4HBA/BDMA:45/ 15/29/10/1 | | 1.30 | 0.79 | 100 |
| 18 | PEB/tBMA/MMA/4HBA/BDMA:70/9/ 17/3/1 | | 1.40 | 0.75 | 100 |
| 19 | PEB/SEBS/tBMA/4HBA/BDMA:45/ 15l29/10/1 | | 1.25 | 0.72 | 100 |
| 20 | PEB/tBCHA/MMA/4HBA: 70/9/18/3 | | 1.49 | 0.88 | 100 |
| 21 | PEB/SEBS/tBCHA/4HBA: 45/15/30/10 | | 1.33 | 0.89 | 100 |
| 22 | PEB/tBCHA/MMA/4HBA: 70/18/9/3 | | 1.48 | 0.82 | 100 |
| Compar. Ex. 1 | | PEB/MMA/:70/30 | 0.26 | <0.01 | 0 |
| 2 | | PEB/P(tBCHA/MMA): 70/(9/21) | 0.21 | <0.01 | 0 |

Symbols and abbreviations shown in the Tables have the following meanings, respectively:
o: No insoluble residues were recovered.
X: Insoluble residues were recovered.
PEB: Propylene-ethylene-1-butene random copolymer
SEBS: Styrene-ethylene-butylene-styrene copolymer
EPR: Ethylene-propylene copolymer
PB: Propylene-1-butene random copolymer
MMA: Methyl methacrylate
tBCHA: 4-t-butylcyclohexyl acrylate
tBCHMA: 4-t-butylcyclohexyl methacrylate
MAA: Acrylic acid.
CHA: Cyclohexyl acrylate
tBMA: t-butyl methacrylate
CHMA: Cyclohexyl methacrylate
4HBA: 4-hydroxybutyl acrylate
IBXMA: Isobornyl methacrylate
EDMA: 1,3-butylene dimethacrylate.

### INDUSTRIAL APPLICABILITY

As described above, the modified polyolefin resin composition of the present invention is excellent in the solubility in a solvent and adhesion properties to a substrate having a hardly adherable properties, such as a polyolefin type resin, since the resin composition comprises a modified polyolefin resin produced by subjecting a polyolefin resin (A) to a graft modification by vinyl monomer(s) comprising at least 4-t-butylcyclohexyl (meth)acrylate.

Besides, the modified polyolefin resin composition of the present invention is suitable for the use of a primer for painting since the resin composition is excellent in the adhesion properties not only to a non-polar substrate comprising a polyolefin resin but also to a top coat or a clear coating.

Further, the modified polyolefin resin composition of the present invention is suitable for the use of an adhesive or printing ink since the resin composition has excellent adhesion properties not only to a non-polar substrate comprising a polyolefin resin but also to a polar resin such as a polyester, polyurethane, and polyamide.

## Claims

1. A modified polyolefin resin produced by subjecting a polyolefin resin (A) to a graft modification by vinyl monomer (s) (B) comprising at least 4-t-butylcyclohexyl (meth)acrylate.

2. A modified polyolefin resin composition comprising the modified polyolefin resin defined in claim 1.

3. The modified polyolefin resin composition according to claim 2, wherein the vinyl monomer (s) (B) comprises no unsaturated carboxylic acid or its anhydride.

4. The polyolefin resin composition according to claim 2, wherein the vinyl monomer (s) (B) further comprises a monomer having a hydroxyl group in the molecule.

5. A method of painting wherein the modified polyolefin resin composition of claim 2 is used as a primer.

6. Use of the modified polyolefin resin composition defined in claim 2 as an adhesive.

7. Use of the modified polyolefin resin composition defined in claim 2 in a printing ink.

8. A process for producing a modified polyolefin resin comprising subjecting a polyolefin resin (A) to a graft modification by vinyl monomer (s) (B) comprising at least 4-t-butylcyclohexyl (meth)acrylate.

9. The process according to claim 8, comprising the steps of
(i) dissolving the polyolefin resin (A) in an aromatic hydrocarbon solvent, at elevated temperature;
(ii) adding the vinyl monomer (B) to the polyolefin resin(A) dissolved in aromatic hydrocarbon solvent; and
(iii) subjecting the mixture to graft polymerization.

10. The process according to claim 8, comprising the steps of:
(i) melting and kneading, using a Banbury Mixer, kneader or extruder, the polyolefin resin (A) and vinyl monomer(s) (B) in the presence of peroxide.

11. The process according to claim 8, comprising the steps of:
(i) mixing the polyolefin resin (A) with vinyl monomer(s) (B) to form a mixture; and
(ii) irradiating the mixture.

12. The process according to claim 8, comprising the steps of:
(i) impregnating the polyolefin resin (A) with vinyl monomers (B); and
(ii) polymerizing the vinyl monomer(s) (B) by radical polymerisation using organic peroxide.

13. The process according to any of claims 8 to 12, wherein the graft modification is conducted at a mass ratio of polyolefin resin (A) to vinyl monomer (s) (A/B) in the range of 1 to 95 to 99 to 5.

14. The process according to any of claims 8 to 13, including a step of adding a solvent to the modified polyolefin resin to form a modified polyolefin resin composition.

## Patentansprüche

1. Modifiziertes Polyolefinharz, hergestellt durch Aussetzen eines Polyolefinharzes (A) einer Pfropfmodifikation durch (ein) Vinylmonomer(e) (B), umfassend mindestens 4-t-Butylcyclohexyl(meth)acrylat.

2. Modifizierte Polyolefinharzzusammensetzung, umfassend das nach Anspruch 1 definierte modifizierte Polyolefinharz.

3. Modifizierte Polyolefinharzzusammensetzung nach Anspruch 2, worin das/die Vinylmonomer(e) (B) keine ungesättigte Carbonsäure oder ihr Anhydrid umfasst/umfassen.

4. Polyolefinharzzusammensetzung nach Anspruch 2, worin das/die Vinylmonomer(e) (B) ferner ein Monomer mit einer Hydroxylgruppe im Molekül umfasst/umfassen.

5. Anstreichverfahren, worin die modifizierte Polyolefinharzzusammensetzung nach Anspruch 2 als ein Grundiermittel verwendet wird.

6. Verwendung der nach Anspruch 2 definierten modifizierten Polyolefinharzzusammensetzung als einen Klebstoff.

7. Verwendung der nach Anspruch 2 definierten modifizierten Polyolefinharzzusammensetzung in einer Druckfarbe.

8. Verfahren zur Herstellung eines modifizierten Polyolefinharzes, umfassend das Aussetzen eines Polyolefinharzes (A) einer Pfropfmodifikation durch (ein) Vinylmonomer(e) (B), umfassend mindestens 4-t-Butylcyclohexyl(meth)acrylat.

9. Verfahren nach Anspruch 8, umfassend die Schritte von:
(i) Auflösen des Polyolefinharzes (A) in einem aromatischen Kohlenwasserstoff-Lösungsmittel bei erhöhter Temperatur;
(ii) Zufügen von Vinylmonomer (B) zum in einem aromatischen Kohlenwasserstoff-Lösungsmittel aufgelösten Polyolefinharz (A); und
(iii) Aussetzen des Gemischs der Pfropfpolymerisation.

10. Verfahren nach Anspruch 8, umfassend die Schritte von:
(i) Schmelzen und Kneten des Polyolefinharzes (A) und des Vinylmonomers/der Vinylmonomere (B) in Anwesenheit von Peroxid mit einem Banbury-Mischer, -Kneter oder -Extruder.

11. Verfahren nach Anspruch 8, umfassend die Schritte von:
(i) Mischen des Polyolefinharzes (A) mit (einem) Vinylmonomer(en) (B) zur Bildung eines Gemischs; und
(ii) Bestrahlen des Gemischs.

12. Verfahren nach Anspruch 8, umfassend die Schritte von:
(i) Imprägnieren des Polyolefinharzes (A) mit Vinylmonomeren (B); und
(ii) Polymerisieren des Vinylmonomers/der Vinylmonomere (B) durch die Radikalkettenenpolymerisation mit organischem Peroxid.

13. Verfahren nach einem der Ansprüche 8 bis 12, worin die Pfropfmodifikation bei einem Massenverhältnis von Polyolefinharz (A) zu Vinylmonomer(en) (A/B) im Bereich von 1 zu 95 bis 99 zu 5 durchgeführt wird.

14. Verfahren nach einem der Ansprüche 8 bis 13, das einen Schritt des Zufügens eines Lösungsmittels zum modifizierten Polyolefinharz zur Bildung einer modifzierten Polyolefinharzzusammensetzung einschließt.

## Revendications

1. Résine de polyoléfine modifiée produite en soumettant une résine de polyoléfine (A) à une modification par greffage d'un/des vinyle(s) monomère(s) (B) contenant au moins du 4-t-butylcyclohexyl (méth)acrylate.

2. Composition de résine de polyoléfine modifiée renfermant la résine de polyoléfine modifiée définie dans la revendication 1.

3. Composition de résine de polyoléfine modifiée selon la revendication 2, dans laquelle le(s) vinyle(s) monomère(s) (B) renferme(nt) un acide carboxylique insaturé ou son anhydride.

4. Composition de résine de polyoléfine selon la revendication 2, dans laquelle le(s) vinyle(s) monomère(s) (B) contient(iennent) en outre un monomère possédant un groupe hydroxyle dans la molécule.

5. Procédé de peinture dans lequel la composition de résine modifiée de la revendication 2 est utilisée à titre de couche d'apprêt.

6. Utilisation de la composition de résine de polyoléfine modifiée définie dans la revendication 2 à titre d'adhésif.

7. Utilisation de la composition de résine de polyoléfine modifiée définie dans la revendication 2 dans une encre d'impression.

8. Procédé de production d'une résine de polyoléfine modifiée obtenue en soumettant une résine de polyoléfine (A) à une modification par greffage d'un/des vinyle(s) monomère(s) (B) comprenant au moins un (méth)acrylate de 4-t-butylcyclohexyle.

9. Procédé selon la revendication 8, comprenant les étapes de
(i) dissolution de la résine de polyoléfine (A) dans un solvant d'hydrocarbure aromatique à température élevée ;
(ii) ajout du vinyle monomère (B) à la résine de polyoléfine (A) dissolue dans un solvant d'hydrocarbure aromatique ; et
(iii) soumission du mélange à une polymérisation par greffage.

10. Procédé selon la revendication 8, comprenant les étapes de :
(i) fusion et pétrissage, en utilisant un mixeur Banbury, un malaxeur ou une extrudeuse, de la résine de polyoléfine (A) et des vinyles monomères (B) en présence de peroxyde.

11. Procédé selon la revendication 2, comprenant les étapes de :
(i) mélange de la résine de polyoléfine (A) avec un/des vinyle(s) monomère(s) (B) pour former un mélange ; et
(ii) irradiation du mélange.

12. Procédé selon la revendication 8, comprenant les étapes de :
(i) imprégnation de la résine de polyoléfine (A) de vinyles monomères (B) ; et
(ii) polymérisation du/des vinyle(s) monomère(s) (B) par polymérisation radicale en utilisant du peroxyde organique.

13. Procédé selon l'une quelconque des revendications 8 à 12, dans lequel la modification par greffage est réalisée à un rapport de masse de résine de polyoléfine (A)/vinyle(s) monomère(s) (A/B) se situant dans la plage de 1 à 95 à 99 à 5.

14. Procédé selon l'une quelconque des revendications 8 à 13, comprenant l'étape d'ajout d'un solvant à la résine de polyoléfine modifiée pour former une composition de résine de polyoléfine modifiée.
